# EUROPEAN PATENT SPECIFICATION

(11) **EP 3 911 991 B1**
(45) Date of publication and mention of the grant of the patent: **17.04.2024**
(21) Application number: 20701846.6
(22) Date of filing: 16.01.2020
(51) Int. Cl.: G02B 27/01

(54) **AUGMENTED REALITY SYSTEM**
SYSTEM FÜR ERWEITERTE REALITÄT
SYSTÈME DE RÉALITÉ AUGMENTÉE

(30) Priority: 17.01.2019 GB 201900652
(43) Date of publication of application: 24.11.2021
(73) Proprietor: Snap Inc., Santa Monica, CA 90405 (US)
(72) Inventor: WOODS, David, Abingdon Oxfordshire OX14 4SR (GB); GREY, David, Abingdon Oxfordshire OX14 4SR (GB)
(74) Representative: Gill Jennings & Every LLP
(86) International application number: PCT/GB2020/050091
(87) International publication number: WO 2020/148543

(56) References cited:
- EP-A1- 3 106 911
- US-A1- 2017 336 636
- US-A1- 2018 356 639

## Description

The present invention relates to an augmented reality system, and a technique for improving user experience.

Augmented reality systems can be worn on a user's head to augment a user's perception of the real world by supplying additional light. Known head-mounted systems include glasses and helmet structures. Augmented reality systems also include head-up displays that can be implemented in vehicles, such as in cars, trucks or also in aircraft cockpits.

Augmented reality light may be provided to users using a waveguide structure. Diffraction gratings are positioned on or in the waveguides to couple light from a projector into a waveguide. A further diffraction grating structure can then be used to couple light out of the waveguide and towards a user. Other augmented reality technologies may be employed to generate similar results. For example, prism projector or prism-based design augmented reality systems may use multiple lenses, or prisms, to control the optical pathway of light from a display component to a user.

The optical components, such as the waveguides or prisms, in these applications are typically transparent so that the user can view light from the projector as well as light from their external environment.

However, many augmented reality systems present difficulties in providing a mixed-reality display that naturally augments a generated image with a user's view of their external environment. A user might use the external environment, or real world objects, as a reference to expect, or perceive, where an augmented reality image could be positioned. Difficulties can thus arise because a generated image is not provided in a way that allows a user to focus on it in the same way as he or she would perceive the external surroundings. This may lead to a user experiencing discomfort, such as eye-strain or nausea, as they have to adjust their focus between an augmented realty image and their actual physical surroundings. For example, an augmented reality image of an ornament is not positioned in an expected way relative to a real-world mantelpiece which leads to a jarring experience of the user where he or she has to adjust their focus between the ornament and the mantelpiece.

EP 3 106 911 A1 and US 2018/356639 A1 disclose binocular augmented reality display systems with means for avoiding a mismatch between a binocular convergence distance and a focus distance. An object of the invention is to improve the ability of an augmented reality system to vary a generated image such that a user would perceive it more naturally and thus improve user experience.

According to the invention there is provided a binocular augmented reality display system as defined in the independent claim.

In this way, the binocular augmented reality display system allows a separate image to be provided to each eye, where each image is rendered and projected from a different eye-point or perspective. The two separate images converge, via stereo fusion, at the binocular convergence distance to provide a common augmented reality image to a user. This advantageously creates an illusion of the common augmented reality image being three-dimensional. The three-dimensional and convergence distance conditions may be provided by use of an image generator (e.g. using computer software). In addition, the convergence distance and the focal distance of the binocular augmented reality display system can match one another within the acceptable predetermined tolerance. The predetermined tolerance is preferably selected to match the limits of sensitivity of the human eye. Advantageously, the binocular augmented reality display system can provide an augmented reality image to a user that can be perceived to more naturally engage with the external environment.

The predetermined minimum and maximum values are -0.25 and +0.25 dioptres of the binocular convergence distance. A dioptre is a measure of optical power, which is equal to the reciprocal of focal length with units of m⁻¹. Thus, the tolerance is inversely proportional to the selected binocular convergence distance. The limit of sensitivity of the human eye to differences in focal distance is approximately 0.25 dioptres. When prescribing corrective lenses an optometrist will select lenses graded in steps of around 0.25 dioptres because the human eye does not perceive any notable difference in optical power between these step sizes. Therefore setting the predetermined minimum and maximum values of the focal distance to be ±0.25 dioptres of the binocular convergence distance provides a workable tolerance within which the common augmented reality image can be focussed and not be significantly perceived by a user.

In practical terms, for a convergence distance of 4 metres, the selected focal distance is provided within a tolerance of ±0.25 dioptres. This means the control system has flexibility to select a focal distance in the range between 2 metres and infinity, which represent the minimum and maximum focal distance values (according to a minimum tolerance of +0.25 dioptres and a maximum tolerance of -0.25 dioptres respectively). As another example, for a convergence distance of 2 metres and a focal distance between ±0.25 dioptres of the convergence distance, the minimum focal distance value is 1.33 metres and the maximum focal distance value is 4 metres. This provides a significant advantage because the first and second variable focus mechanisms typically have a limited range within which the focal distance can be adjusted without causing significant degradation of the augmented reality image. The present technique can allow for adjustment of the focal distance, without requiring that the focal distance precisely matches the convergence distance. From the perspective of a human viewer a difference between the convergence distance and the focal distance can be difficult to perceive, provided the difference is within around 0.25 dioptres.

The first and second variable focus mechanisms may each adjust a respective focus value of the first and second projectors between a first value and a second value. In this way, each variable focus mechanism can adjust its respective focus value without significantly impairing the quality of the image that is coupled out of the first and second waveguides to the user. Ideally a diffractive imaging waveguide, or waveguide assembly, requires a collimated light input from a projector so that the waveguide assembly preserves any angular information within in-coupled light. Any spatial information is degenerate, which means that the image quality as seen by a user would be degraded. If a deviation from a collimated light input is small enough, the focal distance of the input light can be preserved in the outcoupled light and the degradation of the image quality may be tolerable. Therefore the respective focus value of a first or second variable focus mechanism should be adjusted between a first value and a second value such that the degradation of the image quality is tolerable to a user.

The first value may be -0.25 dioptre and the second value may be +0.25 dioptre. In this way, the limit of sensitivity of the human eye to differences in focus can be utilised such that user would not perceive any impairment to the quality of the image coupled out of the waveguides.

The first and second convex and concave lenses may have equal and opposite optical power. In this way, the magnification applied to real world objects by the convex lens is effectively cancelled by the concave lens. Therefore, objects in the real world are perceived in the same way as before, when viewed through the convex and concave lenses. Augmented reality images, however, are coupled towards a user through the concave lenses only (and not through the convex lenses). In the absence of the concave lens, augmented reality images may be projected from the waveguides with parallel rays. These objects would have an effective focal distance at infinity. The presence of the concave lenses broadens light rays outwardly so that they appear to emanate from a focal distance that is closer to the user than infinity. These "push-pull" lenses can be used to allow normal viewing of real-world objects, but to allow augmented reality images to be positioned at a focal distance that is closer than infinity.

The first variable focus mechanism and/or the second variable focus mechanism may be continually variable. In this way the control system can minimise or eliminate the difference (i.e. error margin) between the binocular convergence distance and the focal distances of the variable focus mechanisms. Continually variable focus mechanisms may, in an implementation not according to the invention, constantly adjust the focus of the light emitted by a projector at a predetermined adjustment frequency in order for the common augmented reality image to be in optimal focus relative to the binocular convergence distance. In other words such a display system is configured to continually keep the error margin between the binocular convergence distance and the focal distances of the variable focus mechanisms at, or as close as possible to, a minimum value. Alternatively the first variable focus mechanism and/or the second variable focus mechanism may have a finite number of power states.

According to the invention a control system is provided to ensure that the position of a common augmented reality image lies within the predetermined minimum and maximum values on either side of the binocular convergence distance, and to only adjust the focus in a variable focus mechanism when the image position no longer lies within the predetermined values. In other words a variable focus mechanism may not adjust its focus until the common augmented reality image is beyond the predetermined minimum or maximum value of the binocular convergence distance. The display system effectively maximises the use of the acceptable range (before the quality of an image is significantly impaired) on either side of the binocular convergence distance, which may reduce the frequency of focus adjustment in variable focus mechanisms when providing an augmented reality image.

Preferably the finite number of power states each defines the predetermined minimum and maximum values on either side of an optimal convergence distance, and wherein the control system may be further configured to select a power state in which the common augmented reality image is to be positioned. In this way the system can select which power state is most suited to focus the first and second augmented reality images to provide the common augmented reality image. The distance between the convergence distance of the common augmented reality image and an optimal convergence distance for an image to be focussed for a power state should be minimised in order to improve image quality.

Embodiments of the invention are now described, by way of example, with reference to the drawings, in which:
Figure 1 is a side view of the binocular augmented reality device in an embodiment of the present invention;
Figure 2a is a schematic representation of a convergence distance of an augmented reality image provided by the binocular augmented reality device in an embodiment of the present invention;
Figure 2b is a schematic representation of focal distances of augmented reality images provided by the binocular augmented reality device in an embodiment of the present invention;
Figure 3a is a schematic representation of a common augmented reality image provided by the binocular augmented reality device in an embodiment of the present invention;
Figure 3b is another schematic representation of a common augmented reality image provided by the binocular augmented reality device in an embodiment of the present invention;
Figure 4a is a schematic representation of a first image focus range provided by the binocular augmented reality device in an embodiment of the present invention;
Figure 4b is another schematic representation of a second image focus range provided by the binocular augmented reality device in an embodiment of the present invention; and
Figure 4c is another schematic representation of a third image focus range provided by the binocular augmented reality device in an embodiment of the present invention.

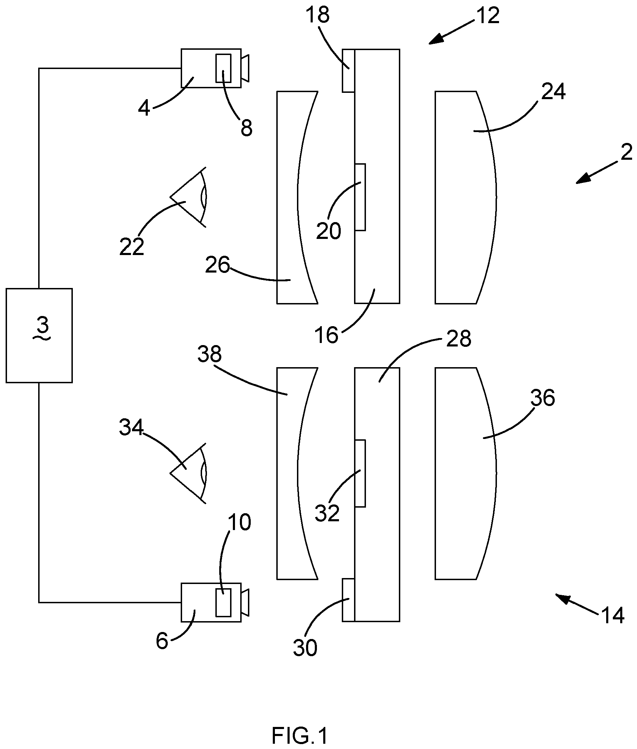

Figure 1 is a schematic view of a binocular augmented reality device 2. The binocular augmented reality device 2 has a first projector 4 and a second projector 6, where the first projector has a first variable focus mechanism 8 and the second projector has a second variable focus mechanism 10. The first projector 4 is configured to provide input light to a first waveguide assembly 12 and the second projector 6 is configured to provide input light a second waveguide assembly 14.

The binocular augmented reality device includes an image generator (not shown) and a control system 3 which is configured to generate and provide image signals to the first projector 4 and the second projector 6. The control system 3 is also configured to send control signals to the first variable focus mechanism 8 and the second variable focus mechanism 10 to adjust the focus or focal distance of light projected by each respective projector.

The first waveguide assembly 12 is configured to receive the input light from the first projector 4 to incouple the light into a first waveguide 16 at a first input diffractive optical element 18 and outcouple light at a first outpout diffractive optical element 20 toward a first eye 22 of a user. The first input diffractive optical element 18 and the first output diffractive optical element 20 are positioned at an internal surface of a first waveguide 16. Alternative arrangements of the diffractive optical elements will be apparent to those skilled in the art.

The first waveguide assembly 12 also has a first convex lens 24 arranged at an external side of the first waveguide 16 and a first concave lens 26 arranged at an internal side of the first waveguide 16. In this example embodiment the first convex lens 24 and the first concave lens 26 have equal and opposite optical powers. This means that as light from the external environment travels toward the first eye 22 the light would be focussed (to converge) at the first convex lens 24 to a predetermined degree and then diverge (and broaden) at the first concave len 26 to the same predetermined degree, such that external environment light received at the first eye 22 would be viewed normally, i.e. as if there is no corrective lens in front of the first eye 22.

The second waveguide assembly 14 is configured to receive the input light from the second projector 6 to incouple the light into a second waveguide 28 at a second input diffractive optical element 30 and outcouple light at a second outpout diffractive optical element 32 toward a second eye 34 of a user. The second input diffractive optical element 30 and the second output diffractive optical element 32 are positioned at an internal surface of a second waveguide 28. Alternative arrangements of the diffractive optical elements will be apparent to those skilled in the art.

The second waveguide assembly 14 also has a second convex lens 36 arranged at an external side of the second waveguide 28 and a second concave lens 38 arranged at an internal side of the second waveguide 28. In this example embodiment the second convex lens 36 and the second concave lens 38 have equal and opposite optical powers. This means that as light from the external environment travels toward the second eye 34 the light would be focussed (to converge) at the second convex lens 36 to a predetermined degree and then diverge (and broaden) at the second concave lens 38 to the same predetermined degree, such that external environment light received at the second eye 34 would be viewed normally, i.e. as if there is no corrective lens in front of the second eye 34.

As will be appreciated by a person skilled in the art, the variable focus mechanisms may be internal to the projector, or light engine, (as shown in Figure 1), or alternatively the variable focus mechanism may be a separately positioned between a projector and a waveguide assembly. In addition it should be apparent to a skilled person that the variable focus mechanism may be continually variable or capable of only a finite number of power states.

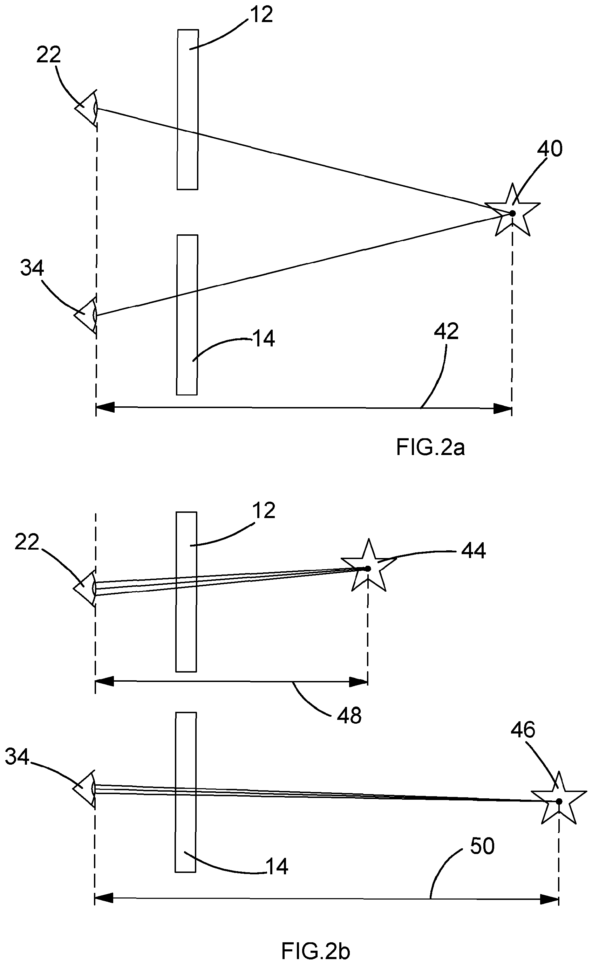

Figure 2a shows a schematic view of the first waveguide assembly 12 outcoupling projected light from the first projector (not shown) to the first eye 22 and the second waveguide assembly 14 outcoupling projected light from the second projector (not shown) to the second eye 34 where the outcoupled light from the two waveguide assemblies present a common augmented reality image 40 of an object to a user at a convergence distance 42. The projected light from the two projectors are of the same object but project an image from different viewing perspectives, or eye-points, in order to create a stereo three-dimensional image. It should be understood that each waveguide assembly could outcouple light of one or more objects toward each eye, and Figure 2a is simply an example of how a common augmented reality image is formed for a single object.

Figure 2b shows a schematic view of the first waveguide assembly 12 and the second waveguide assembly 14 outcoupling projected light from their respective projectors (not shown) to present a first augmented reality image 44 and a second augmented reality image 46 toward a user. The first image 44 and the second image 46 are not of the same object and each image has its own focal distance; the first image 44 is presented to the first eye 22 at a first focal distance 48 and the second image 46 is presented to the second eye 34 at a second focal distance 50.

Different combinations of common augmented reality images, as shown in Figure 2a, and separate augmented reality images with different focal distances, as shown in Figure 2b, can be provided to present a binocular augmented reality display to a user.

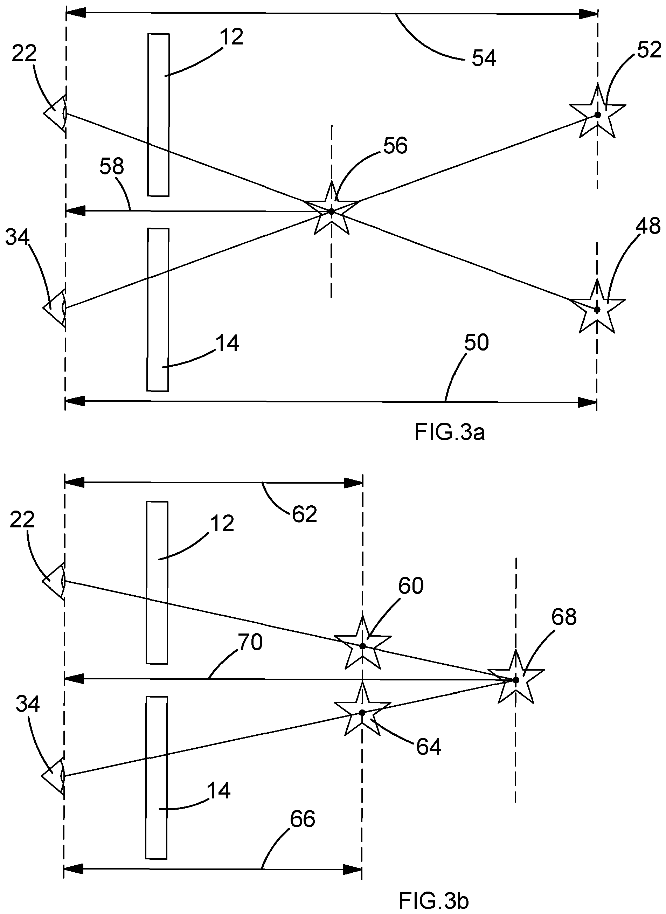

Figures 3a and 3b show the binocular augmented reality display system of the present invention providing a common augmented reality image to the first eye 22 and the second eye 34 of a user. Figure 3a shows an example of the invention where a common augmented reality image is presented at a focal distance of a predetermined minimum value, and Figure 3b shows an example of the invention where a common augmented reality image is presented at a focal distance of a predetermined maximum value.

In Figure 3a the first waveguide assembly 12 outcouples projected light from the first projector (not shown) toward the first eye 22 to present a first augmented reality image 48 at focal distance 50. In this example, focal distance 50 is at 4 metres from the first eye 22. The second waveguide assembly 14 outcouples projected light from the second projector (not shown) toward the second eye 34 to present a second augmented reality image 52 at focal distance 54. In this example, focal distance 54 is at 4 metres from the second eye 34. It should be understood that the focal distances of the first augmented reality image 48 and the second augmented reality image 52 are individually controlled by respective focus mechanisms on respective projectors, and therefore the focal distances of the two images may be the same or may be different to each other.

The first augmented reality image 48 and the second augmented reality image 52, when viewed in combination by the first eye 22 and the second eye 34, form common augmented reality image 56 at convergence distance 58. In this example, the convergence distance of the common augmented reality image 56 is at 2 metres from the first eye 22 and the second eye 34.

As can be seen in Figure 3a, focal distance 50 and focal distance 54 (in this example both are 4 metres) are greater than convergence distance 58 (of 2 metres), such that first augmented reality image 48 and second augmented reality image 52 are presented beyond common augmented reality image 56 relative to a user. The control system (not shown) positions the common augmented reality image 56 at the convergence distance of 2 metres and controls the variable focus mechanisms of each projector (not shown) such that the focal distances 50 and 54 are within the predetermined values on either side of the 2 metres convergence distance 58. In this case, the first augmented reality image 48 and the second augmented reality image 52 are both focussed at 4 metres, which is at the predetermined minimum value of -0.25 dioptre from the binocular convergence distance 58.

In Figure 3b the first waveguide assembly 12 outcouples projected light from the first projector (not shown) toward the first eye 22 to present a first augmented reality image 60 at focal distance 62. In this example, focal distance 62 is at 1.33 metres from the first eye 22. The second waveguide assembly 14 outcouples projected light from the second projector (not shown) toward the second eye 34 to present a second augmented reality image 64 at focal distance 66. In this example, focal distance 66 is at 1.33 metres from the second eye 34. It should be understood that the focal distances of the first augmented reality image 60 and the second augmented reality image 64 are individually controlled by respective focus mechanisms on respective projectors, and therefore the focal distances of the two images may be the same or may be different to each other.

The first augmented reality image 60 and the second augmented reality image 64, when viewed in combination by the first eye 22 and the second eye 34, form common augmented reality image 68 at convergence distance 70. In this example, the convergence distance of the common augmented reality image 68 is at 2 metres from the first eye 22 and the second eye 34.

As can be seen in Figure 3b, focal distance 62 and focal distance 66 (in this example both are 1.33 metres) are smaller than convergence distance 70 (of 2 metres), such that first augmented reality image 60 and second augmented reality image 64 are presented nearer to a user relative to common augmented reality image 68. The control system (not shown) positions the common augmented reality image 68 at the convergence distance of 2 metres and controls the variable focus mechanisms of each projector (not shown) such that the focal distances 62 and 66 are within the predetermined values on either side of the 2 metres convergence distance 68. In this case, the first augmented reality image 60 and the second augmented reality image 64 are both focussed at 1.33 metres, which is at the predetermined maximum value of +0.25 dioptre from the binocular convergence distance 68.

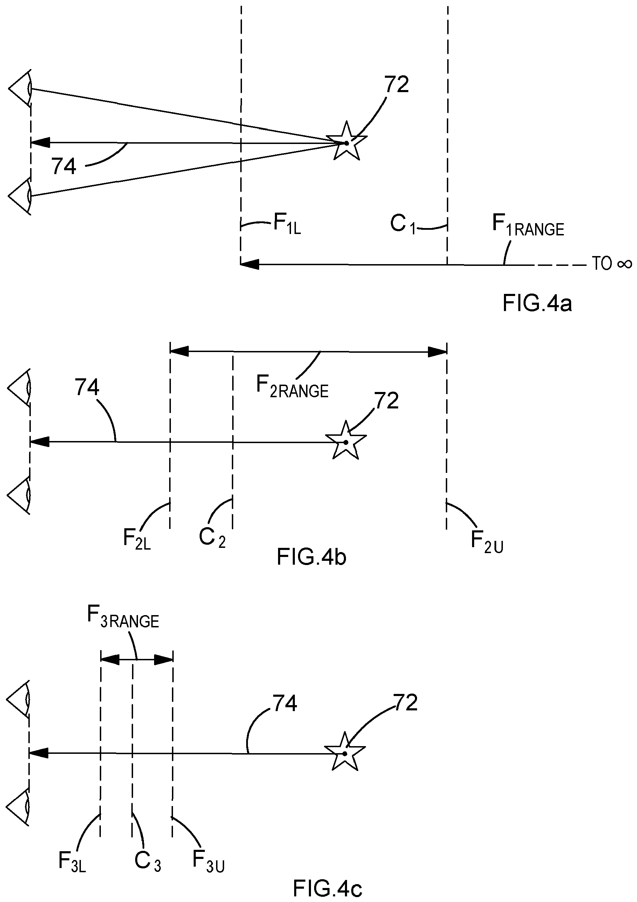

Figures 4a, 4b and 4c show different finite, or fixed, number of power states which may be implemented in the variable focus mechanisms of each of the projectors in the present invention. Each fixed power state, or focus state, of a projector provides an image focus range defined by a predetermined minimum focal distance and a predetermined maximum focal distance from a user eye. Control system 3 determines a convergence distance for a common augmented reality image (i.e. an image that is formed by the convergence of the first projector 4 and the second projector 6), which in this example is provided within the image focus ranges of the first and second projectors. Figure 4a shows an example of the invention where the fixed power states of the projectors are suitable for a common augmented reality image to be focussed at a convergence distance between two metres and infinity, Figure 4b shows an example of the invention where the fixed power states are suitable for a common augmented reality image to be focussed at a convergence distance between 1.33 metres and 4 metres, and Figure 4c shows an example of the invention where the fixed power states are suitable for a common augmented reality image to be focussed at a convergence distance between 0.8 metres and 1.33 metres.

In Figure 4a the first and second projectors of the binocular augmented reality display system (not shown) are each set at a first fixed power state having a first image focus range F_{1RANGE} between a lower focus limit F_{1L} and an upper focus limit F_{1U} (not shown). The first fixed power state has an optimal convergence distance C₁ at which a common augmented reality image (provided by the display system) would be optimally focussed. In this example, convergence distance C₁ is four metres away from a user's eyes. Focus limits F_{1L} and F_{1U} are defined by the distance ±0.25 dioptres away from the optimal convergence distance C₁ of the first power state. In this example, lower focus limit F_{1L} is two metres from a user's eyes and upper focus limit F_{1U} is infinity.

The binocular augmented reality display system provides a common augmented reality image 72 at a convergence distance 74. In this example, convergence distance 74 is three metres from a user's eyes and within the first image focus range F_{1RANGE} of the first power state. Therefore there would be no significant impairment to the image quality of common augmented reality image 72 at the first power state.

In Figure 4b the first and second projectors of the binocular augmented reality display system (not shown) are each set at a fixed second power state having an image focus range F_{2RANGE} between a lower focus limit F_{2L} and an upper focus limit F_{2U}. The second fixed power state has an optimal convergence distance C₂ at which a common augmented reality image (provided by the display system) would be optimally focussed. In this example, convergence distance C₂ is two metres away from a user's eyes. Focus limits F_{2L} and F_{2U} are defined by the distance ±0.25 dioptres away from the optimal convergence distance C₂ of the second power state. In this example, lower focus limit F_{2L} is 1.33 metres from a user's eyes and upper focus limit F_{2U} is 4 metres from a user's eyes.

The binocular augmented reality display system provides the common augmented reality image 72 at a convergence distance 74. Again, in this example, convergence distance 74 is three metres from a user's eyes and within the second image focus range F_{2RANGE} of the second power state. Therefore there would be no significant impairment to the image quality of common augmented reality image 72 at the second power state.

In Figure 4c the first and second projectors of the binocular augmented reality display system (not shown) are each set at a fixed third power state having an image focus range F_{3RANGE} between a lower focus limit F_{3L} and an upper focus limit F_{3U}. The third fixed power state has an optimal convergence distance C₃ at which a common augmented reality image (provided by the display system) would be optimally focussed. In this example, convergence distance C₃ is one metre away from a user's eyes. Focus limits F_{3L} and F_{3U} are defined by the distance ±0.25 dioptres away from the optimal convergence distance C₃ of the third power state. In this example, lower focus limit F_{3L} is 0.8 metres from a user's eyes and upper focus limit F_{3U} is 1.33 metres from a user's eyes.

The binocular augmented reality display system provides the common augmented reality image 72 at a convergence distance 74. Again, convergence distance 74 is three metres from a user's eyes. However, in this example convergence distance 74 is not within the image focus range F_{3RANGE} of the third power state. Therefore common augmented reality image 72 would not be in correct focus at the third power state.

It should be understood that as binocular convergence distance of a common image decreases, the image focus range in which there is no significant impairment of image quality also narrows in order for the the focal distance of an image to be within a tolerance of ±0.25 dioptres.

The examples provided in Figure 4a and 4b describe image focus ranges which overlap between the first and second power states, which allow the control system to select a power state which may be more appropriate for a particular common augmented reality image (for example, a particular power state is selected in order to minimise the difference between the convergence distance and the focal distances). For example, if a common augmented reality image has a convergence distance of 2.5 metres, the control system would select the second power state to focus the image since the image convergence distance is 0.5 metres from the optimal convergence distance of the second power state (of two metres), as compared to being 1.5 metres away from the optimal convergence distance of the first power state (of four metres).

However, it should be understood that the system can also be modified such that an upper focus limit of the image focus range of a power state (for example the third power state in Figure 4c) meets or is substantially equivalent to a lower focus limit of the image focus range of another power state (for example the second power state in Figure 4b), such that the system simply selects the power state in which the convergence distance of a common augmented reality image lies within. In other words, the image focus ranges of each power state do not overlap and therefore a common augmented reality image can only be correctly focussed in a specific power state.

Other embodiments will be apparent to those skilled in the art from consideration of the specification and practice of the embodiments disclosed herein. It is intended that the specification and examples be considered as exemplary only.

## Claims

1. A binocular augmented reality display system (2) comprising:
a first projector (4) with a first variable focus mechanism (8);
a second projector (6) with a second variable focus mechanism (10);
a first waveguide assembly (12) comprising:
a first waveguide (16) having an external side and an internal side
a first convex lens (24) having a first positive power arranged at the external side of the first waveguide;
a first concave lens (26) having a first negative power arranged at the internal side of the first waveguide;
a first input diffractive optical element (18) configured to receive light from the first projector and couple it into the first waveguide;
a first output diffractive optical element (20) configured to couple light out of the first waveguide toward the first concave lens; and
a second waveguide assembly (14) comprising:
a second waveguide (28) having an external side and an internal side
a second convex lens (36) having a second positive power arranged at the external side of the second waveguide;
a second concave lens (38) having a second negative power arranged at the internal side of the second waveguide;
a second input diffractive optical element (30) configured to receive light from the second projector and couple it into the second waveguide;
a second output diffractive optical element (32) configured to couple light out of the second waveguide toward the second concave lens,
wherein the first and second waveguide assemblies are each configured to outcouple light toward a user in order to present a common augmented reality image to the user,
wherein the system comprises a control system (3) configured to position the common augmented reality image at a binocular convergence distance and to control the first and second variable focus mechanisms so that the common augmented reality image is provided at a focal distance which is within predetermined minimum and maximum values on either side of the binocular convergence distance and to only adjust the first variable focus mechanism and the second variable focus mechanism when the focal distance is outside of the predetermined minimum and maximum values, and
wherein the predetermined minimum and maximum values are -0.25 and +0.25 dioptres of the binocular convergence distance, respectively.

2. The binocular augmented reality system of claim 1, wherein the first and second variable focus mechanisms can each adjust a respective focus value of the first and second projectors between a first value and a second value.

3. The binocular augmented reality system of claim 2, wherein the first value is -0.25 dioptre and the second value is +0.25 dioptre.

4. The binocular augmented reality system of any of the preceding claims, wherein the first and second convex and concave lenses have equal and opposite optical power.

5. The binocular augmented reality system of any of the preceding claims, wherein the first variable focus mechanism and/or the second variable focus mechanism is continually variable.

6. The binocular augmented reality system of any of the preceding claims, wherein the first variable focus mechanism and/or the second variable focus mechanism has a finite number of power states.

7. The binocular augmented reality system of claim 6, wherein the finite number of power states each defines the predetermined minimum and maximum values on either side of an optimal convergence distance, and wherein the control system is further configured to select a power state in which the common augmented reality image is to be positioned.

## Patentansprüche

1. Binokulares Anzeigesystem (2) für erweiterte Realität, umfassend:
einen ersten Projektor (4) mit einem ersten variablen Fokusmechanismus (8);
einen zweiten Projektor (6) mit einem zweiten variablen Fokusmechanismus (10);
eine erste Wellenleiteranordnung (12), umfassend:
einen ersten Wellenleiter (16), der eine Außenseite und eine Innenseite aufweist;
eine erste konvexe Linse (24), die eine erste positive Brechkraft aufweist, die an der Außenseite des ersten Wellenleiters angeordnet ist;
eine erste konkave Linse (26), die eine erste negative Brechkraft aufweist, die an der Innenseite des ersten Wellenleiters angeordnet ist;
ein erstes beugendes optisches Eingangselement (18), das konfiguriert ist, um Licht vom ersten Projektor zu empfangen und es in den ersten Wellenleiter zu koppeln;
ein erstes beugendes optisches Ausgangselement (20), das konfiguriert ist, um Licht aus dem ersten Wellenleiter in Richtung der ersten konkaven Linse zu koppeln; und
eine zweite Wellenleiteranordnung (14), umfassend:
einen zweiten Wellenleiter (28), der eine Außenseite und eine Innenseite aufweist;
eine zweite konvexe Linse (36), die eine zweite positive Brechkraft aufweist, die an der Außenseite des zweiten Wellenleiters angeordnet ist;
eine zweite konkave Linse (38), die eine zweite negative Brechkraft aufweist, die an der Innenseite des zweiten Wellenleiters angeordnet ist;
ein zweites beugendes optisches Eingangselement (30), das konfiguriert ist, um Licht vom zweiten Projektor zu empfangen und es in den zweiten Wellenleiter zu koppeln;
ein zweites beugendes optisches Ausgangselement (32), das konfiguriert ist, um Licht aus dem zweiten Wellenleiter in Richtung der zweiten konkaven Linse zu koppeln,
wobei die erste und die zweite Wellenleiteranordnung jeweils konfiguriert sind, um Licht in Richtung eines Benutzers auszukoppeln, um dem Benutzer ein gemeinsames Bild mit erweiterter Realität zu präsentieren,
wobei das System ein Steuersystem (3) umfasst, das konfiguriert ist, dass um das gemeinsame Bild mit erweiterter Realität in einem binokularen Konvergenzabstand zu positionieren, und den ersten und zweiten variablen Fokusmechanismus zu steuern, sodass das gemeinsame Bild mit erweiterter Realität in einem Fokusabstand bereitgestellt wird, der auf beiden Seiten des binokularen Konvergenzabstands innerhalb vorbestimmter Minimal- und Maximalwerte liegt, und um den ersten variablen Fokusmechanismus und den zweiten variablen Fokusmechanismus nur dann anzupassen, wenn der Fokusabstand außerhalb der vorbestimmten Minimal- und Maximalwerte liegt, und
wobei die vorbestimmten Minimal- und Maximalwerte jeweils -0,25 und +0,25 Dioptrien des binokularen Konvergenzabstands betragen.

2. Binokulares System für erweiterte Realität nach Anspruch 1, wobei der erste und der zweite variable Fokusmechanismus jeweils einen jeweiligen Fokuswert des ersten und des zweiten Projektors zwischen einem ersten Wert und einem zweiten Wert anpassen können.

3. Binokulares System für erweiterte Realität nach Anspruch 2, wobei der erste Wert -0,25 Dioptrien beträgt und der zweite Wert +0,25 Dioptrien beträgt.

4. Binokulares System für erweiterte Realität nach einem der vorstehenden Ansprüche, wobei die ersten und die zweiten konvexen und konkaven Linsen gleiche und entgegengesetzte optische Brechkraft aufweisen.

5. Binokulares System für erweiterte Realität nach einem der vorstehenden Ansprüche, wobei der erste variable Fokusmechanismus und/oder der zweite variable Fokusmechanismus stufenlos variabel sind.

6. Binokulares System für erweiterte Realität nach einem der vorstehenden Ansprüche, wobei der erste variable Fokusmechanismus und/oder der zweite variable Fokusmechanismus eine endliche Anzahl von Brechkraftzuständen aufweisen.

7. Binokulares System für erweiterte Realität nach Anspruch 6, wobei die endliche Anzahl von Brechkraftzuständen jeweils die vorbestimmten Minimal- und Maximalwerte auf beiden Seiten eines optimalen Konvergenzabstands definieren, und wobei das Steuersystem weiter konfiguriert ist, um einen Brechkraftzustand auszuwählen, in dem das gemeinsame Bild mit erweiterter Realität zu positionieren ist.

## Revendications

1. Système d'affichage binoculaire à réalité augmentée (2) comprenant :
un premier projecteur (4) avec un premier mécanisme à focale variable (8) ;
un second projecteur (6) avec un second mécanisme à focale variable (10) ;
un premier ensemble guide d'ondes (12) comprenant :
un premier guide d'ondes (16) présentant un côté externe et un côté interne ;
une première lentille convexe (24) présentant une première puissance positive agencée sur le côté externe du premier guide d'ondes ;
une première lentille concave (26) présentant une première puissance négative agencée sur le côté interne du premier guide d'ondes ;
un premier élément optique diffractif d'entrée (18) configuré pour recevoir la lumière du premier projecteur et la coupler dans le premier guide d'ondes ;
un premier élément optique diffractif de sortie (20) configuré pour coupler la lumière à l'extérieur du premier guide d'ondes vers la première lentille concave ; et
un second ensemble guide d'ondes (14) comprenant :
un second guide d'ondes (28) présentant un côté externe et un côté interne ;
une seconde lentille convexe (36) présentant une seconde puissance positive agencée sur le côté externe du second guide d'ondes ;
une seconde lentille concave (38) présentant une seconde puissance négative agencée sur le côté interne du second guide d'ondes ;
un second élément optique diffractif d'entrée (30) configuré pour recevoir la lumière du second projecteur et la coupler dans le second guide d'ondes ;
un second élément optique diffractif de sortie (32) configuré pour coupler la lumière à l'extérieur du second guide d'onde vers la seconde lentille concave,
dans lequel les premier et second ensembles guides d'ondes sont chacun configurés pour découpler la lumière vers un utilisateur afin de présenter une image commune de réalité augmentée à l'utilisateur,
dans lequel le système comprend un système de commande (3) configuré pour positionner l'image commune de réalité augmentée à une distance de convergence binoculaire et pour commander les premier et second mécanismes à focale variable de sorte que l'image commune de réalité augmentée soit fournie à une distance focale qui est comprise entre des valeurs minimale et maximale prédéterminées de part et d'autre de la distance de convergence binoculaire et pour ajuster le premier mécanisme à focale variable et le second mécanisme à focale variable uniquement lorsque la distance focale est en dehors des valeurs minimale et maximale prédéterminées, et
dans lequel les valeurs minimale et maximale prédéterminées sont -0,25 et +0,25 dioptrie de la distance de convergence binoculaire, respectivement.

2. Système binoculaire de réalité augmentée selon la revendication 1, dans lequel les premier et second mécanismes à focale variable peuvent chacun ajuster une valeur de focalisation respective des premier et second projecteurs entre une première valeur et une seconde valeur.

3. Système binoculaire de réalité augmentée selon la revendication 2, dans lequel la première valeur est -0,25 dioptrie et la seconde valeur est +0,25 dioptrie.

4. Système binoculaire de réalité augmentée selon l'une quelconque des revendications précédentes, dans lequel les première et seconde lentilles convexes et concaves présentent une puissance optique égale et opposée.

5. Système binoculaire de réalité augmentée selon l'une quelconque des revendications précédentes, dans lequel le premier mécanisme à focale variable et/ou le second mécanisme à focale variable est/sont variable(s) en continu.

6. Système binoculaire de réalité augmentée selon l'une quelconque des revendications précédentes, dans lequel le premier mécanisme à focale variable et/ou le second mécanisme à focale variable présente(nt) un nombre fini d'états de puissance.

7. Système binoculaire de réalité augmentée selon la revendication 6, dans lequel le nombre fini d'états de puissance définit chacun les valeurs minimale et maximale prédéterminées de part et d'autre d'une distance de convergence optimale, et dans lequel le système de commande est en outre configuré pour sélectionner un état de puissance dans lequel l'image commune de réalité augmentée est à positionner.
